# DEMANDE DE BREVET EUROPEEN

(11) **EP 2 793 062 A1**
(43) Date de publication de la demande: **22.10.2014**
(21) Numéro de dépôt: 14164563.0
(22) Date de dépôt: 14.04.2014
(51) Int. Cl.: G02B 6/00, F21V 8/00

(54) **Elément de carrosserie de véhicule automobile comprenant une source de lumière et des moyens de guidage de la lumière**

(30) Priorité: 16.04.2013 FR 1353426
(71) Demandeur: Faurecia Bloc Avant, 92000 Nanterre (FR)
(72) Inventeur: Benboujema, Chawki, 25200 MONTBELIARD (FR)
(74) Mandataire: Blot, Philippe Robert Emile

(57) **Abrégé**

L'élément de carrosserie comprend un corps translucide (2) pourvu d'une face externe (6), destinée à être tournée vers l'extérieur du véhicule, et d'une face interne (4), destinée à être tournée vers l'intérieur du véhicule, la face externe (6) étant revêtue par une couche de revêtement comprenant une zone réalisée en matériau au moins partiellement opaque.

L'élément comprend en outre au moins une source de lumière (18) agencée pour injecter la lumière à l'intérieur du corps (2) selon au moins une première direction (D1, D2,...DN), le corps (2) comprenant des moyens (23) de guidage de la lumière agencés à l'intérieur du corps (2), lesdits moyens de guidage (23) étant agencés pour renvoyer la lumière selon une seconde direction (F), différente de la première, vers la face externe (6) du corps (2).

## Description

La présente invention concerne un élément de carrosserie de véhicule automobile, comprenant un corps translucide pourvu d'une face externe, destinée à être tournée vers l'extérieur du véhicule, et d'une face interne, destinée à être tournée vers l'intérieur du véhicule, la face externe étant revêtue par une couche de revêtement comprenant une zone réalisée en matériau au moins partiellement opaque.

La présente invention concerne également un procédé de réalisation d'un tel élément de carrosserie.

Pour améliorer l'apparence d'un véhicule automobile, il est connu de prévoir des éléments lumineux destinés à illuminer la carrosserie du véhicule ou à former des éléments lumineux d'avertissements pour les autres véhicules. Ces éléments lumineux prennent par exemple la forme de guides de lumière disposés le long d'entrées d'air du véhicule, par exemple autour de la grille d'entrée d'air, ou formant un logo ou le long des ouvertures de porte, ou la forme d'optiques, tels que des feux stops clignotants ou autres, etc. Les sources de lumière de tels éléments lumineux sont disposées dans des ouvertures prévues dans des éléments de carrosserie ou entre des éléments de carrosserie adjacents et sont directement visibles depuis l'extérieur du véhicule.

Ainsi, l'aspect du véhicule est amélioré lorsque les sources de lumières sont allumées, mais ces sources de lumières restent visibles depuis l'extérieur du véhicule lorsqu'elles sont éteintes, ce qui nuit alors à l'aspect du véhicule.

Le même problème peut se poser pour des sources de lumière fonctionnelles, telles que les feux stop ou autres.

Il est également connu de mettre en oeuvre des procédés à plusieurs étapes pour la réalisation de baguettes décoratives chromées, telles que des bandes décoratives chromées de pare-choc automobiles. De tels procédés impliquent généralement un moulage par injection d'un substrat, suivi d'une galvanisation du substrat dans plusieurs bains chimiques.

Un autre procédé connu consiste dans le moulage d'un film d'insertion. Un film de revêtement est découpé, formé puis moulé par injection. Le produit résultant est opaque.

La technique connue en elle-même de chromage de certains composants conduit à une épaisseur de couche de chrome incompatible avec les applications de rétro-éclairage. Le rétro-éclairage est seulement possible en détruisant intentionnellement la surface visible.

L'un des buts de l'invention est de pallier les inconvénients précités en proposant un élément de carrosserie dont la face extérieure peut être illuminée, sans que la source de lumière soit visible depuis l'extérieur du véhicule lorsqu'elle est éteinte.

A cet effet, l'invention concerne un élément de carrosserie du type précité, dans lequel ledit élément comprend en outre au moins une source de lumière agencée pour injecter la lumière à l'intérieur du corps selon au moins une première direction, le corps comprenant des moyens de guidage de la lumière agencés à l'intérieur du corps, lesdits moyens de guidage étant agencés pour renvoyer la lumière selon une seconde direction, différente de la première, vers la face externe du corps.

La source de lumière est à l'écart de l'élément de carrosserie et n'est pas directement visible depuis l'extérieur du véhicule. De plus, la couche de revêtement est agencée pour empêcher la lumière naturelle de rendre les moyens de guidage de la lumière visibles lorsque la source de lumière est éteinte. Ainsi, l'aspect du véhicule n'est pas dégradé lorsque la source de lumière est éteinte et est amélioré lorsqu'elle est allumée. En outre, l'invention offre une plus grande liberté dans l'agencement des sources lumineuses, celles-ci n'ayant pas à être disposées dans des ouvertures spécifiques ou des emplacements spécifiques entre les éléments de carrosserie. Le corps formant un guide de lumière, il n'est pas nécessaire de prévoir un guide de lumière séparé, ce qui réduit le nombre de pièces constituant l'élément de carrosserie.

Selon d'autres caractéristiques de l'élément de carrosserie selon l'invention :
- les moyens de guidage de la lumière comprennent une pluralité de crans agencés pour recevoir la lumière incidente selon la première direction et pour la réfléchir selon la seconde direction ;
- la source de lumière est apte à émettre une lumière présentant une longueur d'onde comprise entre 380 nm et 780 nm ;
- le corps est propre à diffuser une lumière incidente en son sein ;
- la couche de revêtement comprend au moins une ouverture s'étendant en regard des moyens de guidage de la lumière, les dimensions de ladite ouverture étant agencées pour que l'ouverture laisse passer la lumière de la source de lumière lorsque celle-ci est allumée ;
- la couche de revêtement s'étend de façon continue sur la face externe du corps et est dépourvue d'ouverture, la couche de revêtement présentant une épaisseur agencée pour laisser passer la lumière de la source de lumière lorsque celle-ci est allumée et pour empêcher la lumière naturelle de traverser le corps lorsque la source de lumière est éteinte ;
- l'élément de carrosserie comprend en outre une couche de vernis translucide s'étendant sur la couche de revêtement ; et
- l'élément de carrosserie comprend en outre une couche de revêtement supplémentaire s'étendant sur la face interne du corps, la couche de revêtement supplémentaire comprenant au moins une couche réalisée en matériau réfléchissant.

L'invention concerne également un procédé de réalisation d'un élément de carrosserie tel que décrit ci-dessus, le procédé comprenant les étapes suivantes :
- prévoir un corps en matériau translucide,
- revêtir la face externe dudit corps par une couche de revêtement comprenant une zone réalisée en matériau au moins partiellement opaque,
ledit procédé comprenant en outre une étape de fixation d'une source de lumière sur une face latérale du corps.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective et en coupe partielle d'une partie d'un élément de carrosserie selon un premier mode de réalisation de l'invention,
- la Fig. 2 est une représentation schématique en perspective et en coupe partielle d'une partie d'un élément de carrosserie selon un deuxième mode de réalisation de l'invention,
- la Fig. 3 est une représentation schématique en coupe selon le plan III-III de la Fig. 1,
- la Fig. 4 est une représentation schématique de face de l'élément de carrosserie selon les premier et deuxième modes de réalisation de l'invention lorsque la source de lumière est éteinte (à gauche) et lorsqu'elle est allumée (à droite),
- la Fig. 5 est une représentation schématique en coupe des différentes étapes du procédé de réalisation d'un élément de carrosserie selon le premier mode de réalisation, et
- la Fig. 6 est une représentation schématique en coupe des différentes étapes du procédé de réalisation d'un élément de carrosserie selon le deuxième mode de réalisation.

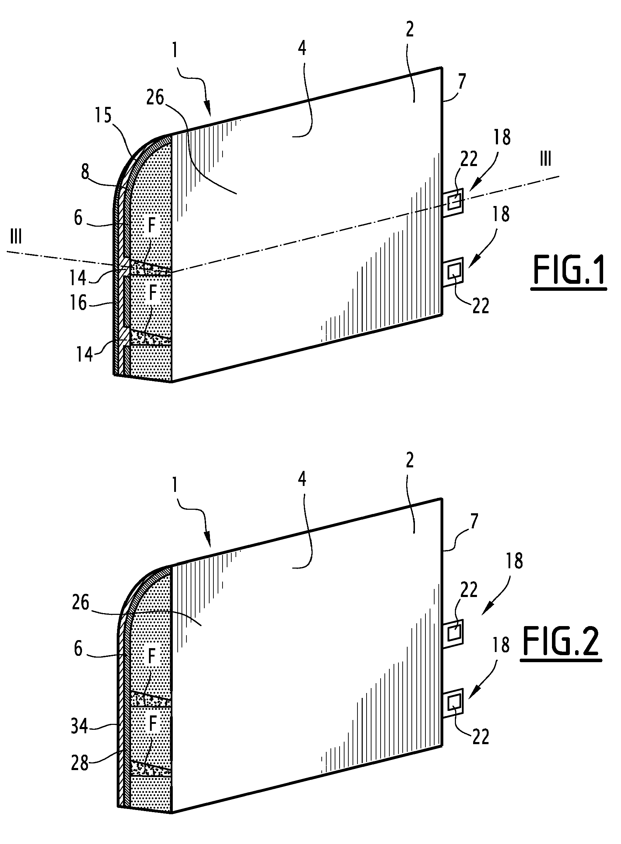

En référence aux Fig. 1 et 2, on décrit un élément de carrosserie 1 de véhicule automobile. Par élément de carrosserie, on entend tout élément de façade d'un véhicule automobile destiné à s'étendre vers l'extérieur du véhicule, tel qu'un panneau de garnissage, un élément de décoration, du type enjoliveur, médaillon, baguette de décoration, grille d'entrée d'air ou autre.

L'élément de carrosserie 1 comprend un corps 2 définissant la forme et l'épaisseur de l'élément de carrosserie 1. Ainsi, dans le cas d'une baguette par exemple, le corps 2 sera sensiblement parallélépipédique et allongé. Ainsi, la forme et l'épaisseur du corps 2 dépendent du type d'élément de carrosserie 1 qu'il est destiné à former et peuvent varier d'un élément de carrosserie 1 à un autre.

Le corps 2 comprend une face interne 4, destinée à être tournée vers l'intérieur du véhicule automobile, et une face externe 6, destinée à être tournée vers l'extérieur du véhicule, c'est-à-dire à s'étendre à l'extérieur du véhicule et à être visible depuis l'extérieur de celui-ci. Le corps 2 comprend en outre deux faces latérales 7.

Le corps 2 est réalisé dans un matériau translucide ou transparent, c'est-à-dire un matériau laissant passer la lumière de la face interne 4 à la face externe 6 et inversement. Le corps 2 est par exemple réalisé en un ou plusieurs matériaux thermoplastiques translucides, tel que l'acrylonitrile butadiène styrène (ABS), le polycarbonate (PC), l'ABS-PC, le polyméthacrylate de méthyle (PMMA), le polypropylène (PP) ou autre ou un mélange de ces matériaux. Le corps 2 présente des propriétés optiques telles que le corps 2 est propre à diffuser une lumière incidente en son sein, comme classiquement connu.

La face externe 6 du corps 2 est revêtue par une couche de revêtement 8 comprenant une zone réalisée en un matériau au moins partiellement opaque, c'est-à-dire ne laissant pas passer la lumière en provenance du corps 2, vers l'extérieur de l'élément de carrosserie, ou en provenance de l'extérieur de l'élément de carrosserie, vers le corps 2.

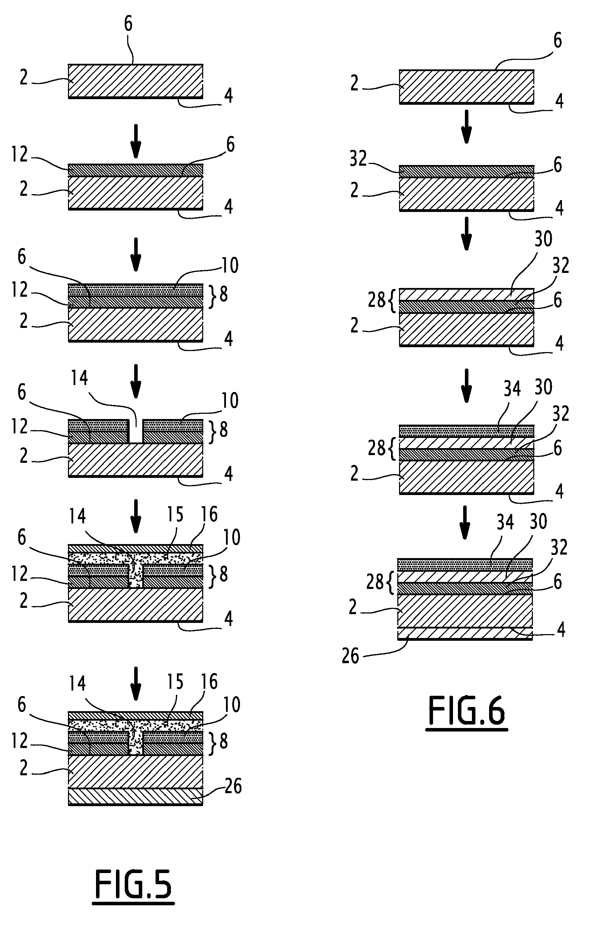

En référence aux Fig. 1 et 5, on décrit à présent un premier mode de réalisation de l'invention.

Dans ce premier mode de réalisation, la zone de la couche de revêtement 8 réalisée en un matériau au moins partiellement opaque s'étend sur l'ensemble de la couche de revêtement 8. La couche de revêtement 8 recouvre toute la face externe 6 du corps 2.

La couche de revêtement 8 comprend au moins une couche de peinture ou de chrome 10. La couche de peinture ou de chrome 10 forme la zone de la couche de revêtement 8 réalisée en un matériau au moins partiellement opaque.

Selon un mode de réalisation, la couche de revêtement 8 comprend en outre une couche de primaire 12, améliorant, de façon connue, l'adhésion de la couche de peinture ou de chrome 10 sur le corps 2. La couche de primaire 12 est disposée directement sur la face externe 6 du corps 2 et la couche de peinture ou de chrome s'étend sur la couche de primaire 12 à l'opposé de la face externe 6 du corps 2, comme représenté sur la Fig. 5.

La couche de revêtement 8 comprend au moins une ouverture 14 la traversant, c'est-à-dire traversant la couche de peinture ou de chrome 10 et, le cas échéant, la couche de primaire 12. Du côté de la face externe 6 du corps 2, l'ouverture 14 est fermée par le corps 2. Ainsi, la lumière traversant le corps 2 peut passer par l'ouverture 14 vers l'extérieur de l'élément de carrosserie 1. A titre d'exemple, l'ouverture 14 a une largeur comprise entre 1 micromètre et quelques millimètres.

L'ouverture 14 peut présenter toute forme souhaitée afin de créer un motif sur la face externe de l'élément de carrosserie 1, comme cela sera décrit ultérieurement. Plusieurs ouvertures 14 distinctes peuvent être prévues pour créer ce motif, comme représenté sur la Fig. 1.

Une couche de revêtement supplémentaire 15 est disposée sur la couche de revêtement 8 et remplit l'ouverture 14. La couche supplémentaire 15 n'a pas d'ouverture et est sensiblement uniforme sur toute l'étendue de la couche de revêtement 8. La couche de revêtement supplémentaire de 15 confère son aspect extérieur à l'élément de carrosserie 1. La face externe de la couche supplémentaire 15 est réfléchissante de telle sorte que la lumière provenant de l'extérieur du véhicule ne passe pas à travers la couche de revêtement supplémentaire 15 dans la couche de revêtement 8. Par conséquent, l'ouverture 14 et le corps 2 ne sont pas visibles depuis l'extérieur de l'élément de carrosserie 1. L'épaisseur de la couche de revêtement supplémentaire 15 est agencée pour laisser passer la lumière provenant d'une source de lumière disposée en-deçà de la couche supplémentaire 15, du côté de sa face interne, au travers de la couche supplémentaire 15, vers l'extérieur de l'élément de carrosserie 1 lorsque la source de lumière est activée, comme cela sera décrit ultérieurement. La lumière provenant de l'extérieur ne rend ainsi pas visibles les éléments qui s'étendent sur la face interne 4 du corps 2, comme expliqué précédemment.

Par conséquent, depuis l'extérieur de l'élément de carrosserie 1, un observateur ne voit que la couche uniforme de revêtement supplémentaire 15 sans percevoir la présence d'éléments sur la face interne 4 du corps 2, ni la présence du motif défini par la (les) ouverture(s) 14 lorsque l'élément de carrosserie 1 est éclairé avec une lumière naturelle. Pour cet observateur, l'élément de carrosserie présente donc un aspect uniforme sous l'effet de la lumière extérieure au véhicule. La couche de revêtement supplémentaire 15 comprend par exemple au moins une couche de peinture ou de chrome et a une épaisseur par exemple comprise entre 1 micromètre et 100 micromètres.

Il convient de noter que la couche de revêtement supplémentaire 15 empêche l'ouverture 14 d'être remplie par de petits éléments ou d'objets, tels que de la poussière.

Une couche de vernis 16 est disposée sur la couche de revêtement 15. La couche de vernis 16 est transparente ou translucide afin que la couche de revêtement supplémentaire 15 reste visible depuis l'extérieur de l'élément de carrosserie.

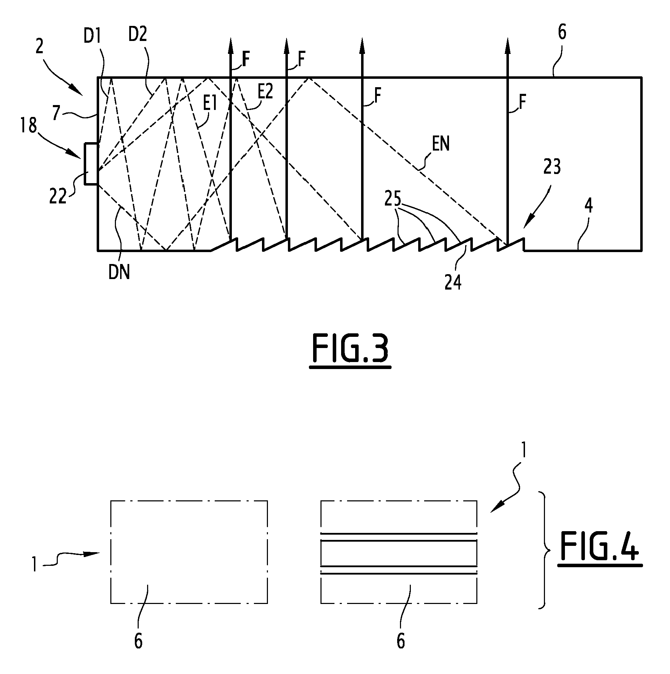

Au moins une source de lumière 18 est disposée du côté d'une des faces latérales 7 du corps 2, comme représenté sur les Fig. 1 et 3. La source de lumière 18 est par exemple formée par au moins une source lumineuse 22, par exemple du type diode électroluminescente. La source lumineuse 22 et son électronique d'alimentation et de commande sont par exemple fixées sur une face latérale 7 du corps 2. La source de lumière 18 est agencée pour injecter la lumière à l'intérieur du corps 2 selon au moins une première direction D1, D2,...DN. La source de lumière 18 est apte à émettre une lumière présentant une longueur d'onde comprise entre 380 nm et 780 nm.

Le corps 2 est muni en outre de moyens 23 de guidage de la lumière agencés à l'intérieur du corps 2, par exemple sur la face interne 4 du corps 2, comme représenté sur la Fig. 3. Les moyens 23 de guidage de la lumière comprennent au moins un organe de réflexion 24 agencé pour renvoyer la lumière vers la face externe 6 du corps 2, selon une seconde direction F différente de la première direction D1, D2,...DN. L'organe de réflexion 24 s'étend par exemple selon un trajet définissant un motif à afficher sur la face externe 6 de l'élément de carrosserie 1.

Selon un mode de réalisation illustré sur la Fig. 3, l'organe de réflexion 24 comprend plusieurs crans 25 adaptés pour recevoir la lumière incidente selon une direction E1, E2,...EN et pour la réfléchir selon la seconde direction F. Les crans 25 forment chacun une pente inclinée de la face interne vers la face externe, par exemple en formant un angle sensiblement égal à 45° avec la face interne. La pente est tournée vers la source lumineuse de sorte que la lumière incidente selon une direction E1, E2,...EN est réfléchie selon la seconde direction F.

En variante non représentée, les crans 25 sont remplacés par des triangles, ou par des demi-sphères, ou par des pyramides, ou encore par des cylindres adaptés pour recevoir la lumière incidente selon une direction E1, E2,...EN et pour la réfléchir selon la seconde direction F.

Le motif peut avoir toute forme souhaitée, de la simple ligne droite, comme représenté sur la Fig. 4, ou courbe à un logo ou autre. Plusieurs sources de lumière 18 et plusieurs organes de réflexion 24 peuvent être prévus pour réaliser le motif. Dans l'exemple de réalisation des Figs. 1 et 3, deux sources de lumière 18 sont disposées sur une face latérale 7 du corps 2 et les moyens de guidage 23 comprennent deux organes de réflexion 24.

La ou les ouvertures 14 pratiquées dans la couche de revêtement 8 sont réalisées en regard de l'organe de réflexion 24 et suivent par exemple le motif défini par l'organe de réflexion 24. Selon un mode de réalisation, plusieurs ouvertures peuvent être réalisées en regard d'un seul organe de réflexion 24 en prévoyant des zones de couche de revêtement 8 entre ces ouvertures, de sorte à former des lignes interrompues à partir d'un seul organe de réflexion 24. Les ouvertures forment ainsi un masque permettant de définir le motif à afficher sur la face externe de l'élément de carrosserie 1 lorsque la source de lumière 18 est allumée.

Ainsi, lorsque la source de lumière 18 est allumée, la lumière émise traverse le corps 2 jusqu'à l'organe de réflexion 24, puis est réfléchie vers la face externe 6 du corps 2 et est diffusée vers l'extérieur de l'élément de carrosserie en passant par la ou les ouvertures 14, ce qui permet de conférer un aspect particulier au véhicule automobile.

Comme représenté sur les figures 1 et 5, selon un mode de réalisation, la face interne 4 du corps 2 est revêtue par une couche de revêtement supplémentaire 26.

La couche de revêtement supplémentaire 26 comprend au moins une couche réalisée en un matériau réfléchissant, par exemple du chrome.

Selon un mode de réalisation, la couche de revêtement supplémentaire 26 comprend en outre une couche de primaire, entre la face interne du corps 2 et la couche de matériau réfléchissant, améliorant ainsi l'adhérence de matériau réfléchissant sur le corps 2.

La couche de revêtement supplémentaire 26 permet de recevoir la lumière résiduelle ayant traversé la face interne 4 du corps 2, selon un rayon incident suivant une direction E1, E2,...EN, pour la réfléchir selon la seconde direction F au travers du corps 2. La couche de revêtement supplémentaire 26 permet ainsi d'augmenter la quantité de lumière réfléchie, et donc d'augmenter le rendement lumineux de l'élément de carrosserie 1.

En variante non représentée, l'élément de carrosserie 1 ne comprend pas de couche de revêtement supplémentaire 26.

En référence à la Fig. 5, on décrit à présent le mode de réalisation de l'élément de carrosserie 1 selon le premier mode de réalisation décrit ci-dessus.

On réalise un corps 2 en matériau translucide ou transparent selon la forme souhaitée de l'élément de carrosserie. De préférence, le corps 2 est obtenu par moulage par injection. Le corps 2 est muni sur sa face interne 4 des moyens 23 de guidage de la lumière comprenant le ou les organes de réflexion 24.

Le corps 2 est revêtu sur sa face externe par une couche de primaire 12 qui permet de faciliter l'application de la couche de peinture ou de chrome 10 sur le corps 2. La couche de peinture ou de chrome 10 est appliquée sur l'ensemble de la couche de primaire 12 de façon classique et connue, de sorte à former la couche de revêtement 8. De préférence, la couche de peinture ou de chrome 10 est appliquée par dépôt physique en phase vapeur ou par pulvérisation.

La ou les ouvertures 14 sont ensuite pratiquées dans la couche de revêtement 8. Ces ouvertures 14 sont par exemple réalisées par attaque chimique de la couche de revêtement, par gravage laser ou par un autre procédé depuis l'extérieur de la face externe de la couche de revêtement 8, à l'opposé de la face externe 6 du corps 2.

La couche de revêtement supplémentaire 15 est ensuite appliquée sur toute l'étendue de la couche de revêtement 8 de sorte à recouvrir celle-ci et à remplir les ouvertures 14.

La couche de vernis 16 est ensuite appliquée sur toute l'étendue de la couche de revêtement supplémentaire 15 de sorte à protéger celle-ci de l'environnement extérieur.

La face interne 4 du corps 2 est ensuite revêtue par la couche de revêtement supplémentaire 26, de préférence obtenue par dépôt physique en phase vapeur ou par pulvérisation.

La ou les sources de lumière 18 sont ensuite fixées, par exemple par collage ou autre, sur une face latérale 7 du corps 2. Selon un mode de réalisation, la ou les sources de lumière 18 peuvent également être fixées au corps 2 avant ou pendant l'une des étapes décrites ci-dessus.

En référence aux Fig. 2 et 6, on décrit à présent un deuxième mode de réalisation de l'invention.

Dans ce deuxième mode de réalisation, une couche de revêtement 28 est disposée sur la face externe 6 du corps, à l'opposé de la face interne 4, de sorte à revêtir celle-ci. Dans ce mode de réalisation, la zone de la couche de revêtement 28 réalisée en un matériau au moins partiellement opaque s'étend sur l'ensemble de la couche de revêtement 28. Contrairement au premier mode de réalisation, la couche de revêtement selon ce deuxième mode de réalisation est dépourvue d'ouvertures.

La couche de revêtement 28 comprend au moins une couche de peinture ou de chrome 30, conférant son aspect extérieur à l'élément de carrosserie 1. La couche de peinture ou de chrome 30 forme la zone de la couche de revêtement 28 réalisée en un matériau au moins partiellement opaque.

Selon un mode de réalisation, la couche de revêtement 28 comprend en outre une couche de primaire 32, améliorant, de façon connue, l'adhésion de la couche de peinture ou de chrome 30 sur le corps 2. La couche de primaire 32 est disposée directement sur la face externe 6 du corps 2 et la couche de peinture ou de chrome s'étend sur la couche de primaire 32 à l'opposé de la face externe 6 du corps 2, comme représenté sur la Fig. 6.

La face externe de la couche de revêtement 28 est réfléchissante de telle sorte que la lumière provenant de l'extérieur du véhicule ne passe pas à travers la couche de revêtement 28 dans le corps 2. Par conséquent, le corps 2 n'est pas visible de l'extérieur de l'élément de corps 1. L'épaisseur de la couche de revêtement 28 est agencée pour laisser passer la lumière issue d'une source de lumière disposée en-deçà de la couche 28, du côté de sa face interne, lorsque cette source est allumée, comme cela sera décrit ultérieurement. L'épaisseur de la couche de revêtement 28 est également agencée pour que la lumière provenant de l'extérieur de l'élément de carrosserie ne permette pas de rendre visible les éléments s'étendant du côté de la face interne 4 du corps 2, comme précédemment décrit.

Ainsi, depuis l'extérieur de l'élément de carrosserie 1, un observateur ne voit que la couche de revêtement 28 uniforme, sans percevoir la présence d'éléments sur la face interne 4 du corps 2 lorsque l'élément de carrosserie est éclairé avec une lumière naturelle. Pour cet observateur, l'élément de carrosserie 1 présente donc un aspect uniforme sous l'effet de la lumière extérieure au véhicule. On notera que par rapport au premier mode de réalisation, l'aspect est amélioré dans la mesure où la couche de revêtement 28 ne comprend aucune ouverture. Ainsi, même de près, il n'est pas possible de voir du côté de la face interne 4 du corps depuis l'extérieur de l'élément de carrosserie 1 sous l'effet d'une lumière extérieure au véhicule. A titre d'exemple, l'épaisseur de la couche de revêtement 28 est comprise entre 1 micromètre et 100 micromètre.

Une couche de vernis 34 est disposée sur la couche de revêtement 28. Cette couche de vernis 34 est transparente ou translucide afin que la couche de peinture ou de chrome 30 reste visible depuis l'extérieur de l'élément de carrosserie. Une telle couche de vernis 34 permet de protéger la couche de peinture ou de chrome 30.

Au moins une source de lumière 18 telle que décrite précédemment est disposée du côté d'une des faces latérales 7 du corps 2, comme représenté sur la Fig. 2.

Le corps 2 est muni en outre des moyens de guidage 23 tels que décrits précédemment en regard de la Fig. 3, agencés à l'intérieur du corps 2, par exemple sur la face interne 4 du corps 2.

Ainsi, lorsque la source de lumière 18 est allumée, la lumière émise traverse le corps 2 jusqu'à l'organe de réflexion 24, puis est réfléchie vers la face externe 6 du corps 2 et est diffusée vers l'extérieur de l'élément de carrosserie en passant par la couche de revêtement 28, ce qui permet de conférer un aspect particulier au véhicule automobile.

Selon un mode de réalisation, la face interne 4 du corps 2 est revêtue par une couche de revêtement supplémentaire 26 telle que décrite précédemment.

En variante non représentée, l'élément de carrosserie 1 ne comprend pas de couche de revêtement supplémentaire 26.

En référence à la Fig. 6, on décrit à présent le mode de réalisation de l'élément de carrosserie 1 selon le deuxième mode de réalisation décrit ci-dessus.

On réalise un corps 2 en matériau translucide ou transparent selon la forme souhaitée de l'élément de carrosserie. De préférence, le corps 2 est obtenu par moulage par injection. Le corps 2 est muni sur sa face interne 4 des moyens 23 de guidage de la lumière comprenant le ou les organes de réflexion 24.

Ce corps 2 est revêtu sur sa face externe par une couche de primaire 32 qui permet de faciliter l'application de la couche de peinture ou de chrome 30 sur le corps 2. La couche de peinture ou de chrome 30 est appliquée sur l'ensemble de la couche de primaire 32 de façon classique et connue, de sorte à former la couche de revêtement 28. De préférence, la couche de peinture ou de chrome 30 est appliquée par dépôt physique en phase vapeur ou par pulvérisation. Une couche de vernis 34 est ensuite appliquée sur la couche de revêtement 28.

La face interne 4 du corps 2 est ensuite revêtue par la couche de revêtement supplémentaire 26, de préférence obtenue par dépôt physique en phase vapeur ou par pulvérisation.

La ou les sources de lumière 18 sont ensuite fixées, par exemple par collage ou autre, sur une face latérale 7 du corps 2. Selon un mode de réalisation, la ou les sources de lumière 18 peuvent également être fixées au corps 2 avant ou pendant l'une des étapes décrites ci-dessus.

Selon un autre mode de réalisation, non représenté, la zone de la couche de revêtement réalisée en un matériau au moins partiellement opaque s'étend uniquement en regard de la source de lumière 18. Cette zone partiellement opaque, par exemple réalisée par l'application d'une couche de peinture ou de chrome, permet d'empêcher la lumière naturelle de rendre la source de lumière 18 visible depuis l'extérieur du véhicule. Le reste de la couche de revêtement est, dans ce mode de réalisation, réalisé dans un matériau translucide ou transparent. Le reste de la couche de revêtement est par exemple réalisé en un ou plusieurs matériaux thermoplastiques translucides, ou encore en verre. Dans ce mode de réalisation, la couche de revêtement est dépourvue d'ouvertures et l'épaisseur de la couche de revêtement est agencée pour empêcher la lumière naturelle de rendre les moyens 23 de guidage de la lumière visibles lorsque la source de lumière 18 est éteinte.

Par rapport aux modes de réalisation dans lesquels la zone de la couche de revêtement réalisée en un matériau au moins partiellement opaque s'étend sur l'ensemble de la couche de revêtement, ce mode de réalisation permet d'obtenir un effet de profondeur de l'élément de la carrosserie 1, ce qui confère un aspect esthétique additionnel à l'élément de carrosserie 1.

L'élément de carrosserie 1 selon les modes de réalisation décrits ci-dessus permet de prévoir des éclairages sur la façade d'un véhicule automobile sans que les sources de lumière soient visibles depuis l'extérieur du véhicule automobile lorsque ces sources sont éteintes, comme représenté sur l'élément de carrosserie 1 de gauche de la Fig. 4. Lorsque les sources de lumière sont allumées, l'éclairage apparaît sur la face externe de l'élément de carrosserie 1, comme représenté sur l'élément de carrosserie de droite de la Fig. 4.

Les différentes couches disposées sur le corps peuvent être appliquées sur ledit corps par l'intermédiaire d'un procédé par dépôt physique par phase vapeur et la couche de chrome peut être appliquée par un procédé de galvanisation via plusieurs bains chimiques.

On obtient ainsi un élément de carrosserie 1 dont l'aspect est amélioré et offrant une plus grande liberté dans l'agencement de l'éclairage. L'éclairage peut être un éclairage décoratif, par exemple lorsque l'élément de carrosserie forme une grille d'entrée d'air de véhicule ou un médaillon formant un logo ou autre, ou un éclairage fonctionnel, par exemple lorsque l'élément de carrosserie s'étend dans une zone de feux de stop de véhicule automobile.

## Revendications

1. Elément de carrosserie (1) de véhicule automobile, comprenant un corps translucide (2), définissant la forme et l'épaisseur de l'élément de carrosserie, pourvu d'une face externe (6), destinée à être tournée vers l'extérieur du véhicule, et d'une face interne (4), destinée à être tournée vers l'intérieur du véhicule, la face externe (6) étant revêtue par une couche de revêtement (8 ; 28) comprenant une zone réalisée en matériau au moins partiellement opaque, **caractérisé en ce que** ledit élément comprend en outre au moins une source de lumière (18) agencée pour injecter la lumière à l'intérieur du corps (2) selon au moins une première direction (D1, D2,...DN), le corps (2) comprenant des moyens (23) de guidage de la lumière agencés à l'intérieur du corps (2), lesdits moyens de guidage (23) étant agencés pour renvoyer la lumière selon une seconde direction (F), différente de la première, vers la face externe (6) du corps (2).

2. Elément de carrosserie selon la revendication 1, **caractérisé en ce que** les moyens (23) de guidage de la lumière comprennent une pluralité de crans (25) agencés pour recevoir la lumière incidente selon la première direction (D1, D2,...DN) et pour la réfléchir selon la seconde direction (F).

3. Elément de carrosserie selon la revendication 1 ou 2, **caractérisé en ce que** la source de lumière (18) est apte à émettre une lumière présentant une longueur d'onde comprise entre 380 nm et 780 nm.

4. Elément de carrosserie selon l'une des revendications 1 à 3, **caractérisé en ce que** le corps (2) est propre à diffuser une lumière incidente en son sein.

5. Elément de carrosserie selon l'une quelconque des revendications 1 à 4, **caractérisé en ce que** la couche de revêtement (8) comprend au moins une ouverture (14) s'étendant en regard des moyens de guidage de la lumière, les dimensions de ladite ouverture (14) étant agencées pour que l'ouverture (14) laisse passer la lumière de la source de lumière (18) lorsque celle-ci est allumée.

6. Elément de carrosserie selon l'une quelconque des revendications 1 à 4, **caractérisé en ce que** la couche de revêtement (28) s'étend de façon continue sur la face externe (6) du corps (2) et est dépourvue d'ouverture, la couche de revêtement (28) présentant une épaisseur agencée pour laisser passer la lumière de la source de lumière (18) lorsque celle-ci est allumée et pour empêcher la lumière naturelle de traverser le corps (2) lorsque la source de lumière (18) est éteinte.

7. Elément de carrosserie selon l'une quelconque des revendications précédentes, **caractérisé en ce qu'**il comprend en outre une couche de vernis (16 ; 34) translucide s'étendant sur la couche de revêtement (8 ; 28).

8. Elément de carrosserie selon l'une quelconque des revendications précédentes, **caractérisé en ce qu'**il comprend en outre une couche de revêtement supplémentaire (26) s'étendant sur la face interne (4) du corps (2), la couche de revêtement supplémentaire (26) comprenant au moins une couche réalisée en matériau réfléchissant.

9. Procédé de réalisation d'un élément de carrosserie selon l'une quelconque des revendications 1 à 8, ledit procédé comprenant les étapes suivantes :
- prévoir un corps (2) en matériau translucide,
- revêtir la face externe (6) dudit corps (2) par une couche de revêtement (8 ; 28) comprenant une zone réalisée en matériau au moins partiellement opaque,
ledit procédé étant **caractérisé en ce qu'**il comprend en outre une étape de fixation d'une source de lumière (18) sur une face latérale (7) du corps (2).
